(19) 

**Europäisches Patentamt**

**European Patent Office**

**Office européen des brevets**

(11) **EP 4 776 027 A1**

(12) **EUROPEAN PATENT APPLICATION**

published in accordance with Art. 153(4) EPC

(43) Date of publication:
**15.07.2026 Bulletin 2026/29**

(21) Application number: **24862760.6**

(22) Date of filing: **02.09.2024**

(51) International Patent Classification (IPC):
***G01S 13/86*** *(2006.01)*     ***G01S 13/89*** *(2006.01)*

(52) Cooperative Patent Classification (CPC):
**G01S 13/86; G01S 13/89**

(86) International application number:
**PCT/JP2024/031489**

(87) International publication number:
**WO 2025/053108 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 JP 2023144771**

(71) Applicant: **Kyocera Corporation**
**Kyoto-shi, Kyoto 612-8501 (JP)**

(72) Inventors:
• **KASHIMA, Yuu**
**Kyoto-shi, Kyoto 612-8501 (JP)**

• **KURODA, Jun**
**Kyoto-shi, Kyoto 612-8501 (JP)**
• **KAWAJI, Satoshi**
**Kyoto-shi, Kyoto 612-8501 (JP)**
• **HOMMA, Takuya**
**Kyoto-shi, Kyoto 612-8501 (JP)**
• **TOBA, Tatsuo**
**Kyoto-shi, Kyoto 612-8501 (JP)**
• **TAKAMATSU, Tetsuya**
**Kyoto-shi, Kyoto 612-8501 (JP)**
• **MATSUE, Yudai**
**Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **ELECTRONIC APPARATUS, SYSTEM, CONTROL METHOD, AND PROGRAM**

(57) An electronic device includes a controller. The controller is configured to acquire information on a predetermined detection area detected based on transmission of a transmission wave and reception of a reflection wave resulting from reflection of the transmission wave, acquire an image of a predetermined imaging area, and extract information on a detection area corresponding to a region of a predetermined object in the image of the predetermined imaging area from the information on the predetermined detection area.

**EP 4 776 027 A1**

## FIG. 6

Swith online/ofline
ON:Online
OFF:Offline

Left Edge  |  Right Edge  |  Target Distance[cm]

310  |  390  |  70

40e  40d  40a  40b  40f  40c  40

**Description**

CROSS-REFERENCE TO RELATED APPLICATIONS

This application claims priority of Japanese Patent Application No. 2023-144771 filed in Japan on September 6, 2023, the entire disclosure of which is hereby incorporated by reference.

TECHNICAL FIELD

The present disclosure relates to an electronic device, a system, a control method, and a program.

BACKGROUND OF INVENTION

In fields such as industries related to automobiles, for example, technologies for measuring the distance between a host vehicle and a prescribed object are becoming increasingly important. In particular, in recent years, various studies have been conducted on radar (radio detecting and ranging) technologies. In these technologies, for example the distance to an object is measured by transmitting radio waves, such as millimeter waves, and receiving reflection waves reflected from an object, such as an obstacle. The importance of such technologies for measuring distances so forth is expected to further increase in the future with the development of technologies for assisting drivers in driving and technologies related to automated driving that allow part or all of the driving process to be automated.

In technologies for detecting objects such as millimeter wave radar mentioned above, various attempts have been made to improve detection accuracy. For example, Patent Literature 1 proposes a technology that can improve the detection accuracy of a detection target in a space in which there is reflection of radio waves.

CITATION LIST

PATENT LITERATURE

Patent Literature 1: Japanese Unexamined Patent Application Publication No. 2021-196195

SUMMARY

In an embodiment, an electronic device includes a controller.

The controller is configured to

acquire information on a predetermined detection area detected based on transmission of a transmission wave and reception of a reflection wave resulting from reflection of the transmission wave,
acquire an image of a predetermined imaging area, and
extract, from the information on the predetermined detection area, information on a detection area corresponding to a region of a predetermined object in the image of the predetermined imaging area.

In an embodiment, a system includes a detection unit, an imaging unit, and a controller.

The detection unit is configured to detect a predetermined detection area based on transmission of a transmission wave and reception of a reflection wave resulting from reflection of the transmission wave.

The imaging unit is configured to capture an image of a predetermined imaging area.

The controller is configured to extract, from information on the predetermined detection area detected by the detection unit, information on a detection area corresponding to a region of a predetermined object in the image of the predetermined imaging area captured by the imaging unit.

In an embodiment, a control method is a control method for an electronic device.

The control method includes

acquiring information on a predetermined detection area that is detected based on transmission of a transmission wave and reception of a reflection wave resulting from reflection of the transmission wave,
acquiring an image of a predetermined imaging area, and
extracting, from the information on the predetermined detection area, information on a detection area corresponding to a region of a predetermined object in the image of the predetermined imaging area.

In an embodiment, a program is configured to cause an electronic device to execute

acquiring information on a predetermined detection area detected based on transmission of a transmission wave and reception of a reflection wave resulting from reflection of the transmission wave,

acquiring an image of a predetermined imaging area, and

extracting, from the information on the predetermined detection area, information on a detection area corresponding to a region of a predetermined object in the image of the predetermined imaging area.

BRIEF DESCRIPTION OF THE DRAWINGS

FIG. 1 is a block diagram schematically illustrating the functional configuration of an electronic device according to an embodiment.

FIG. 2 is a block diagram schematically illustrating the functional configuration of a detection unit according to an embodiment.

FIG. 3 is a diagram illustrating an example of a transmission signal transmitted by a sensor according to an embodiment.

FIG. 4A is a diagram illustrating an example of the configuration of a detection device according to an embodiment.

FIG. 4B is a diagram illustrating an example of the configuration of a detection device according to an embodiment.

FIG. 5 is a flowchart for explaining operation of an electronic device according to an embodiment.

FIG. 6 is a diagram illustrating an example of a UI of an electronic device according to an embodiment.

FIG. 7 is a diagram for explaining an example of processing performed by an electronic device according to an embodiment.

FIG. 8 is a diagram for explaining an example of processing performed by an electronic device according to an embodiment.

FIG. 9 is a diagram illustrating an example of coordinate transformation of an electronic device according to an embodiment.

FIG. 10 is a diagram illustrating an example of coordinate transformation of an electronic device according to an embodiment.

FIG. 11 is a diagram illustrating an example of processing performed by an electronic device according to an embodiment.

DESCRIPTION OF EMBODIMENTS

Being able to accurately detect information on an object based on transmission and reception of radio waves using a sensor such as a millimeter-wave radar is extremely beneficial. The present disclosure provides an electronic device, a system, a control method, and a program that can accurately detect information on an object based on the transmission and reception of radio waves. According to an embodiment, an electronic device, a system, a control method, and a program that can accurately detect information on an object based on the transmission and reception of radio waves can be provided.

In the present disclosure, an "electronic device" may be a device that is driven by electric power. Furthermore, a "system" may include a device driven by electric power. Furthermore, a "user" may be a person (typically a human) who uses a system and/or an electronic device according to an embodiment. A user may include a person who benefits from detecting various objects by using a system and/or an electronic device according to an embodiment. An electronic device, method, and program of the present disclosure may be used to detect people, objects, animals, etc. present in a predetermined space such as a room, a bed, a bathroom, a toilet, a car, a bus, a train, a passageway, or a road.

An electronic device according to an embodiment described below enables information on objects detected by a detection unit (sensor) based on technologies such as millimeter-wave radar to be narrowed down to a specific object specified in a two-dimensional image. For example, when a user specifies a specific object in an image, an electronic device according to an embodiment can detect the object using a radar sensor. Therefore, an electronic device according to an embodiment can detect, for example, vibrations etc. of a specific object in a non-contact manner. Hereinafter, an electronic device according to an embodiment will be described in detail with reference to the drawings. A sensor used in the present disclosure is not limited to millimeter-wave radar, and may also be a sensor that detects radio wave radar using a frequency band other than millimeter waves, ultrasound, light, or the like.

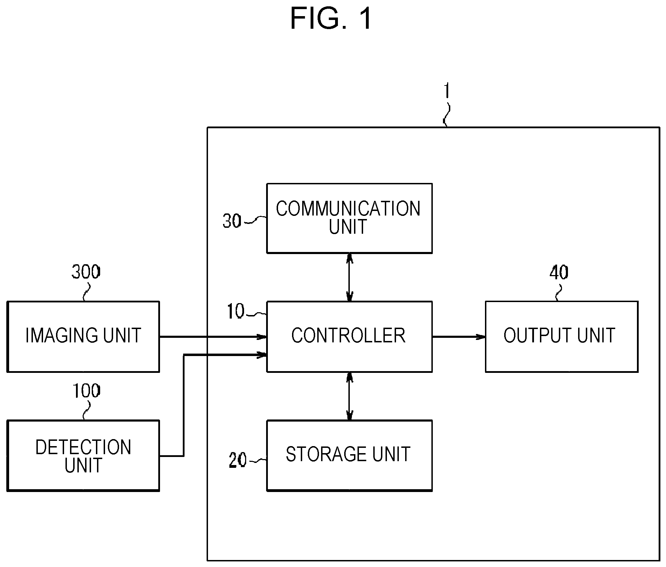

FIG. 1 is a functional block diagram schematically illustrating the configuration of an electronic device 1 according to an embodiment. As illustrated in FIG. 1, the electronic device 1 according to an embodiment includes a controller 10. In an embodiment, the electronic device 1 may include at least one selected from a group consisting of, for example, a storage unit 20, a communication unit 30, and an output unit 40, as appropriate. The controller 10, the storage unit 20, the communication unit 30, the output unit 40, and so on may be disposed in or built into the electronic device 1 at any location.

In addition, at least one selected from a group consisting of the controller 10, the storage unit 20, the communication unit 30, the output unit 40, and so on may be disposed outside the electronic device 1 and connected via either a wired or wireless network or a combination of the two. At least some of the functional units illustrated in FIG. 1 may be omitted from the electronic device 1 according to an embodiment or the electronic device 1 according to an embodiment may include functional units other than those illustrated in FIG. 1 as appropriate.

The electronic device 1 according to an embodiment may be various devices. For example, the electronic device according to an embodiment may be any device, such as a specially designed terminal, as well as a general-purpose smartphone, a tablet, a phablet, a notebook computer (notebook PC), a computer, or a server. The electronic device according to an embodiment may have a function of communicating with another electronic device, such as a mobile phone or a smartphone. Here, the above-mentioned "other electronic device" may be, for example, an electronic device such as a mobile phone or a smartphone, or may be any device, such as a base station, a server, a dedicated terminal, or a computer. The "other electronic device" may be, for example, a detection unit 100 and/or an imaging unit 300, which are described later. The "other electronic device" in the present disclosure may also be a device or apparatus driven by electric power. When the electronic device according to an embodiment communicates with the other electronic device, the communication may be performed in a wired and/or wireless manner.

As illustrated in FIG. 1, the electronic device 1 according to an embodiment may be connected to the detection unit 100 in a wired and/or wireless manner. Through such a connection, the electronic device 1 according to an embodiment can acquire information detected by the detection unit 100. The electronic device 1 according to an embodiment may be connected to the imaging unit 300 in a wired and/or wireless manner. Through such a connection, the electronic device 1 according to an embodiment can acquire an image captured by the imaging unit 300. The detection unit 100 and the imaging unit 300 will be described in further detail later.

The controller 10 controls and/or manages the entire electronic device 1, including each functional unit constituting the electronic device 1. The controller 10 may control and/or manage an entire system, which includes the electronic device 1, including each functional unit constituting the system. The controller 10 may include at least one processor, such as a CPU (central processing unit) or a DSP (digital signal processor), in order to provide control and processing power for executing various functions. The controller 10 may be implemented in the form of a single processor, several processors, or individual processors. The processor may be realized as a single integrated circuit. An integrated circuit may also be referred to as an IC (integrated circuit). The processor may be realized as multiple integrated circuits and discrete circuits connected to each other so as to be able to communicate with each other. The processor may be realized based on various other known technologies.

In an embodiment, the controller 10 may be configured as, for example, a CPU or a DSP and a program executed by the CPU or DSP. The program executed in the controller 10 and the results of the processing executed in the controller 10 etc. may be stored in the storage unit 20, for example. The controller 10 may include a memory necessary for operation of the controller 10 as appropriate.

In the electronic device 1 according to an embodiment, the controller 10 can perform various processing operations on information output as a result of detection performed by the detection unit 100, for example. Therefore, in the electronic device 1, the controller 10 may be connected to the detection unit 100 in a wired and/or wireless manner. In the electronic device 1 according to an embodiment, for example, the controller 10 can perform various processing on information (an image) output as a result of image capturing performed by the imaging unit 300. Therefore, in the electronic device 1, the controller 10 may be connected to the imaging unit 300 in a wired and/or wireless manner. The operation of the controller 10 of the electronic device 1 according to an embodiment will be further described below.

The storage unit 20 may function as a memory that stores various information. The storage unit 20 may store, for example, a program executed in the controller 10 and the results of processing executed in the controller 10. The storage unit 20 may store or accumulate detection results obtained by the detection unit 100 and/or images captured by the imaging unit 300. The storage unit 20 may also function as a work memory of the controller 10. The storage unit 20 may be configured by, for example, a semiconductor memory or the like, but is not limited thereto, and may be any storage device. For example, the storage unit 20 may be a storage medium such as a memory card inserted into the electronic device 1 according to an embodiment. The storage unit 20 may also include, for example, a hard disk drive (HDD) and/or a solid state drive (SSD). The storage unit 20 may also be an internal memory of a CPU used as the controller 10 described later, or may be connected to the controller 10 as a separate unit.

The communication unit 30 has an interface function for performing wired or wireless communication. The communication method used by the communication unit 30 in an embodiment may comply with a wireless communication standard. Examples of such a wireless communication standard include cellular phone communication standards such as 2G, 3G, 4G, and 5G. For example, cellular phone communication standards include LTE (long term evolution), W-CDMA (wideband code division multiple access), CDMA2000, PDC (personal digital cellular), GSM (registered trademark) (global system for mobile communications), and PHS (personal handy-phone system). For example, wireless communication standards include WiMAX (worldwide interoperability for microwave access), IEEE802.11, WiFi, Bluetooth (Registered Trademark), IrDA (infrared data association), and NFC (near field communication). The communication unit 30 may include, for example, a modem whose communication method is standardized by ITU-T (international telecommunication union telecommunication standardization sector). The communication unit 30 can support one or more of the above communication standards.

The communication unit 30 may include, for example, an antenna for transmitting and receiving radio waves and an appropriate RF unit. The communication unit 30 may perform wireless communication with, for example, a communication unit of another electronic device via, for example, an antenna. The communication unit 30 may also be configured as an interface such as a connector for realizing a wired connection to the outside. The communication unit 30 may be configured using known technologies for performing wireless communication, and therefore a more detailed description of the hardware and so forth is omitted.

Various types of information received by the communication unit 30 may be supplied to, for example, the storage unit 20 and/or the controller 10. Various types of information received by the communication unit 30 may be stored in, for example, a memory built into the controller 10. The communication unit 30 may also transmit, for example, the results of processing performed by the controller 10 and/or information stored in the storage unit 20 to the outside.

The output unit 40 may be any display device, such as a liquid crystal display (LCD), an organic electroluminescence (EL) display, or an inorganic electroluminescence (EL) display. The output unit 40 may display various types of information, such as characters, figures, or symbols. The output unit 40 may also display various GUI objects and icon images, for example, to prompt a user operating the electronic device 1. Various data required for performing display on the output unit 40 may be supplied from, for example, the controller 10 or the storage unit 20. If the output unit 40 includes, for example, an LCD, the output unit 40 may be configured to include a backlight, as appropriate. In an embodiment, the output unit 40 may display information based on the results of detection performed by the detection unit 100, for example. In an embodiment, the output unit 40 may display information based on the results of image capturing performed by the imaging unit 300 (for example, images or videos (including still images and videos)).

Furthermore, the output unit 40 may issue a predetermined warning to alert the user of the electronic device 1, etc., based on a predetermined signal output from the controller 10. The output unit 40 may include any functional unit that stimulates at least one of the user's hearing, vision, and touch senses, such as sound, voice, light, text, video, and vibration, as the predetermined warning. Specifically, the output unit 40 may include at least one selected from a group consisting of an audio output unit such as a buzzer or speaker, a light-emitting unit such as an LED, a display unit such as an LCD, and a tactile sensation providing unit such as a vibrator. In this way, the output unit 40 may issue a predetermined warning based on a predetermined signal output from the controller 10. In an embodiment, the output unit 40 may issue the predetermined warning as information that stimulates at least one selected from a group consisting of the hearing, vision, and touch senses.

The output unit 40 is built into the electronic device 1 illustrated in FIG. 1. However, in an embodiment, the output unit 40 may be provided outside the electronic device 1. In this case, the output unit 40 and the electronic device 1 may be connected to each other in a wired manner or a wireless manner, or with a combination of wired and wireless manners.

At least part of each of the functional units constituting the electronic device 1 according to an embodiment as illustrated in FIG. 1 may be configured by a specific means in which software and hardware resources work together.

The detection unit 100 illustrated in FIG. 1 is configured to detect an object (target) such as a car, a human body, a building, or a structure as information on a point cloud in a three-dimensional space. The detection unit 100 according to an embodiment will be described in more detail below.

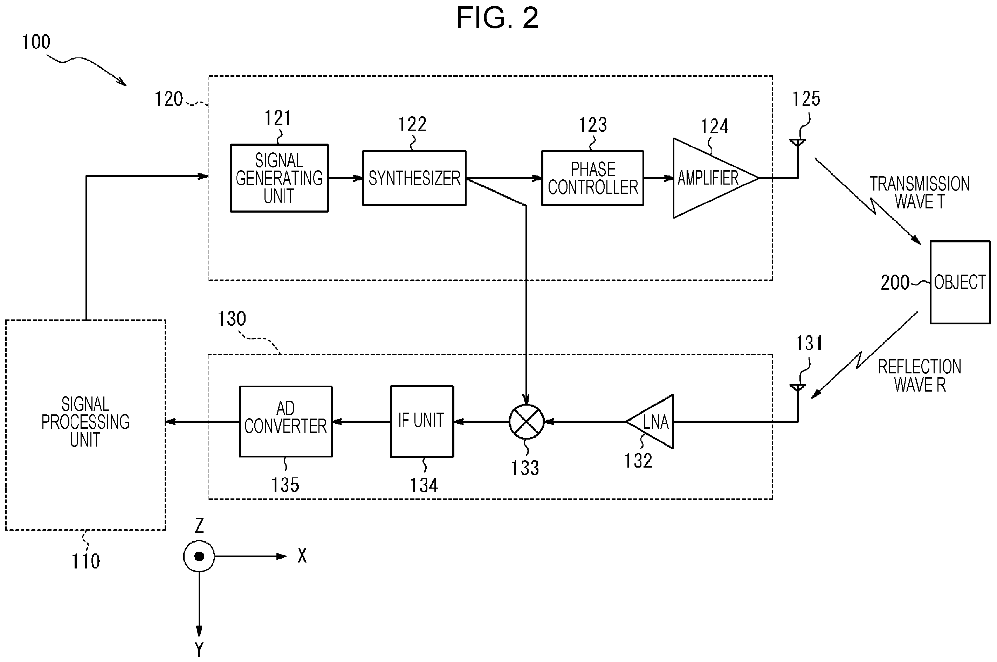

FIG. 2 is a functional block diagram schematically illustrating the configuration of the detection unit 100 according to an embodiment. The detection unit 100 illustrated in FIG. 2 is, for example, based on millimeter-wave radar (radio detecting and ranging) technology (millimeter-wave radar sensor). However, the detection unit 100 according to an embodiment is not limited to a millimeter-wave radar sensor. The detection unit 100 according to an embodiment may be, for example, a quasi-millimeter-wave radar sensor. Furthermore, the detection unit 100 according to an embodiment is not limited to a millimeter-wave radar sensor or a quasi-millimeter-wave radar sensor, and may be any of various radar sensors that transmit and receive radio waves. Furthermore, the detection unit 100 according to an embodiment may be, for example, a microwave sensor, an ultrasonic sensor, or a sensor based on technology such as LIDAR (light detection and ranging, laser imaging detection and ranging).

When measuring the distance to an object using millimeter-wave radar, a frequency-modulated continuous-wave radar (hereinafter referred to as FMCW radar) is sometimes used. In an FMCW radar, a transmission signal is generated by sweeping the frequency of the radio waves to be transmitted. Therefore, for example, in a millimeter-wave FMCW radar that uses radio waves in the 79 GHz frequency band, the frequency of the radio waves being used will have a frequency bandwidth of 4 GHz, for example, from 77 GHz to 81 GHz. The millimeter-wave radar of the present disclosure may also use radio waves in a frequency band other than 77 GHz to 81 GHz. Radar in the 79 GHz frequency band is characterized by having a wider usable frequency bandwidth than other millimeter/quasi-millimeter wave radars, for example, in the 24 GHz, 60 GHz, and 76 GHz frequency bands. Hereafter, a case where such an FMCW radar is used will be described as an example. The FMCW radar system used in the present disclosure may include an FCM (fast-chirp modulation) system in which a chirp signal with a shorter period than normal is transmitted. The signals generated by the detection unit 100 are not limited to FMCW signals. The signals generated by the detection unit 100 may be signals of various systems other than FMCW. A transmission signal sequence stored as a signal to be transmitted may differ depending on these various systems. For example, in the case of the radar signal of the above-mentioned FMCW system, a signal whose frequency increases and decreases in each time sample may be used. Since the above-mentioned various systems can be appropriately applied using known techniques, a more detailed description is omitted as appropriate.

As illustrated in FIG. 2, the detection unit 100 according to an embodiment may include a signal processing unit 110, a transmission unit 120, and a reception unit 130. The signal processing unit 110, the transmission unit 120, the reception unit 130, and so on mentioned above may be disposed in or built into the detection unit 100 at any location. Furthermore, at least one selected from the group consisting of the signal processing unit 110, the transmission unit 120, and the reception unit 130 may be disposed outside the detection unit 100. At least some of the functional units illustrated in FIG. 2 may be omitted from the detection unit 100 according to an embodiment or the detection unit 100 according to an embodiment may include functional units other than the functional units illustrated in FIG. 2 as appropriate.

The signal processing unit 110 controls and/or manages the entire detection unit 100, including each functional unit constituting the detection unit 100. The signal processing unit 110 may include at least one processor, such as a CPU (central processing unit) or a DSP (digital signal processor), to provide control and processing power for executing various functions. The signal processing unit 110 may be implemented as a single processor, several processors, or individual processors. The processor may be realized as a single integrated circuit. An integrated circuit may also be referred to as an IC (integrated circuit). The processor may be realized as multiple integrated circuits and discrete circuits connected to each other so as to be able to communicate with each other. The processor may be realized based on various other known technologies.

In an embodiment, the signal processing unit 110 may be configured as, for example, a CPU or a DSP and a program executed by the CPU or DSP. The program executed in the signal processing unit 110 and the results of the processing executed in the signal processing unit 110 may be stored in, for example, any storage unit built into the signal processing unit 110. The signal processing unit 110 may include a memory necessary for the operation of the signal processing unit 110, as appropriate.

In the detection unit 100 according to an embodiment, the signal processing unit 110 may appropriately perform various types of processing such as distance FFT (fast Fourier transform) processing, velocity FFT processing, arrival angle estimation processing, and clustering processing. These types of processing performed by the signal processing unit 110 are known general radar techniques, and therefore detailed descriptions thereof will be omitted as appropriate.

As illustrated in FIG. 2, the transmission unit 120 may include a signal generating unit 121, a synthesizer 122, a phase controller 123, an amplifier 124, and a transmission antenna 125. The detection unit 100 according to an embodiment may include a plurality of transmission antennas 125. In this case, the detection unit 100 may also include a plurality of phase controllers 123 and amplifiers 124 respectively corresponding to the plurality of transmission antennas 125. When the detection unit 100 according to an embodiment includes a plurality of transmission antennas 125, the plurality of transmission antennas 125 may form a transmission antenna array (transmission array antenna).

As illustrated in FIG. 2, the reception unit 130 may include a reception antenna 131, an LNA 132, a mixer 133, an IF unit 134, and an AD converter 135. The detection unit 100 according to an embodiment may include a plurality of reception units 130 respectively corresponding to the plurality of transmission antennas 125.

In the detection unit 100 according to an embodiment, the signal processing unit 110 can control at least one of the transmission unit 120 or the reception unit 130. In this case, the signal processing unit 110 may control at least one of the transmission unit 120 or the reception unit 130 based on various information stored in any storage unit. For example, any storage unit built into the signal processing unit 110 may store various parameters for setting a range (area) in which an object is to be detected using a transmission wave transmitted from the transmission antenna 125 and a reflection wave received from the reception antenna 131. Furthermore, in the detection unit 100 according to an embodiment, the signal processing unit 110 may instruct the signal generating unit 121 to generate a signal or control the signal generating unit 121 to generate a signal.

The signal generating unit 121 generates a signal (transmission signal) to be transmitted as a transmission wave from the transmission antenna 125 under the control of the signal processing unit 110. When generating the transmission signal, the signal generating unit 121 may allocate a frequency of the transmission signal based on, for example, control performed by the signal processing unit 110. Specifically, the signal generating unit 121 may allocate a frequency of the transmission signal, for example, in accordance with parameters set by the signal processing unit 110. For example, the signal generating unit 121 receives frequency information from the signal processing unit 110 or any storage unit, and generates a signal of a predetermined frequency in a frequency band such as 77 to 81 GHz. The signal generating unit 121 may include a functional unit such as a voltage controlled oscillator (VCO).

The signal generating unit 121 may be configured as hardware having the relevant function, may be configured as a microcomputer, or may be configured as a processor such as a CPU or DSP and a program executed by the processor. Each functional unit described below may also be configured as hardware having the relevant function, or may be configured as a microcomputer, or may be configured as a processor such as a CPU or DSP and a program executed by the processor, if possible.

In the detection unit 100 according to an embodiment, the signal generating unit 121 may generate a transmission signal (transmission chirp signal) such as a chirp signal. In particular, the signal generating unit 121 may generate a signal whose frequency changes periodically in a linear manner (linear chirp signal). For example, the signal generating unit 121 may generate a chirp signal whose frequency increases periodically in a linear manner from 77 GHz to 81 GHz over time. In addition, for example, the signal generating unit 121 may generate a signal whose frequency periodically undergoes a linear increase (up-chirp) and a linear decrease (down-chirp) from 77 GHz to 81 GHz repeatedly over time. The signal generated by the signal generating unit 121 may be preset in the signal processing unit 110, for example. Furthermore, the signal generated by the signal generating unit 121 may be stored in advance in any storage unit, for example. Since chirp signals used in technical fields such as radar are known, more detailed description will be simplified or omitted as appropriate. The signal generated by the signal generating unit 121 is supplied to the synthesizer 122.

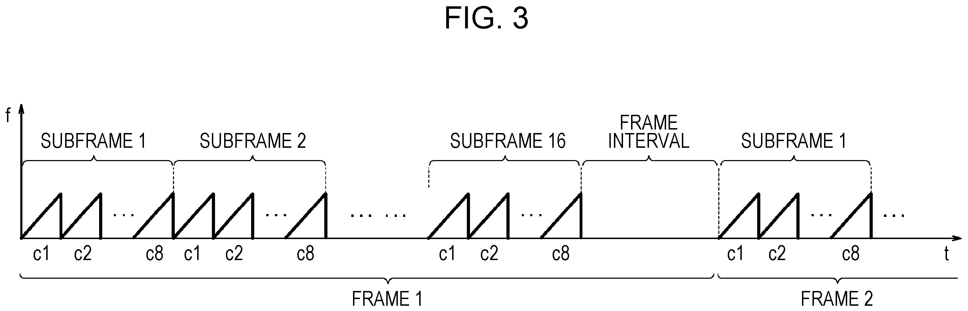

FIG. 3 is a diagram for explaining an example of a chirp signal generated by the signal generating unit 121.

In FIG. 3, the horizontal axis represents elapsed time, and the vertical axis represents frequency. In the example illustrated in FIG. 3, the signal generating unit 121 generates a linear chirp signal whose frequency varies periodically in a linear manner. In FIG. 3, each chirp signal is denoted as $c_1$, $c_2$, ..., $c_8$. As illustrated in FIG. 3, the frequency of each chirp signal increases linearly with time.

In the example illustrated in FIG. 3, eight chirp signals such as $c_1$, $c_2$, ..., $c_8$ are included in one subframe. That is, a subframe 1 and a subframe 2 etc. illustrated in FIG. 3 each include eight chirp signals such as $c_1$, $c_2$, ..., $c_8$. In addition, in the example illustrated in FIG. 3, sixteen subframes such as the subframe 1 to a subframe 16 are included in one frame. That is, a frame 1 and a frame 2 etc. illustrated in FIG. 3 each include sixteen subframes. In addition, as illustrated in FIG. 3, a frame interval of a predetermined length may be provided between the frames. One frame illustrated in FIG. 3 may be, for example, from around 30 milliseconds to 50 milliseconds long.

In FIG. 3, the frame 2 and subsequent frames may have the same or a similar configuration. In addition, in FIG. 3, a frame 3 and subsequent frames may also have the same or a similar configuration. In the detection unit 100 according to an embodiment, the signal generating unit 121 may generate a transmission signal with any number of frames. Furthermore, in FIG. 3, illustration of some chirp signals is omitted. In this way, the relationship between time and frequency of the transmission signal generated by the signal generating unit 121 may be stored in, for example, any storage unit.

In this way, the detection unit 100 according to an embodiment may transmit a transmission signal consisting of subframes including a plurality of chirp signals. Furthermore, the detection unit 100 according to an embodiment may transmit a transmission signal consisting of frames each including a predetermined number of subframes.

In the following description, the detection unit 100 will be described as transmitting a transmission signal having a frame structure as illustrated in FIG. 3. However, the frame structure as illustrated in FIG. 3 is only an example, and, for example, the number of chirp signals included in one subframe is not limited to eight. In an embodiment, the signal generating unit 121 may generate subframes that each include an arbitrary number (for example, any plurality) of chirp signals. Furthermore, the subframe structure illustrated in FIG. 3 is also an example, and the number of subframes included in one frame is not limited to sixteen. In an embodiment, the signal generating unit 121 may generate a frame including any number of subframes (for example, any plurality). The signal generating unit 121 may generate signals having different frequencies. The signal generating unit 121 may generate multiple discrete signals of bandwidths with different frequencies f.

Returning to FIG. 2, the synthesizer 122 increases the frequency of the signal generated by the signal generating unit 121 to a frequency in a predetermined frequency band. The synthesizer 122 may increase the frequency of the signal generated by the signal generating unit 121 to a frequency selected as the frequency of the transmission wave to be transmitted from the transmission antenna 125. The frequency selected as the frequency of the transmission wave to be transmitted from transmission antenna 125 may be set by, for example, the signal processing unit 110. In addition, the frequency selected as the frequency of the transmission wave to be transmitted from the transmission antenna 125 may be stored in, for example, any storage unit. The signal whose frequency has been increased by the synthesizer 122 is supplied to the phase controller 123 and the mixer 133. When there are multiple phase controllers 123, the signal whose frequency has been increased by the synthesizer 122 may be supplied to each of the multiple phase controllers 123. When there are multiple reception units 130, the signal whose frequency has been increased by the synthesizer 122 may be supplied to each of the mixers 133 in the multiple reception units 130.

The phase controller 123 controls the phase of the transmission signal supplied from the synthesizer 122. Specifically, the phase controller 123 may adjust the phase of the transmission signal by appropriately advancing or delaying the phase of the signal supplied from the synthesizer 122, for example, based on control performed by the signal processing unit 110. In this case, the phase controller 123 may adjust the phase of each transmission signal based on the path difference of the transmission wave to be transmitted from the corresponding one of the multiple transmission antennas 125. As a result of the phase controller 123 appropriately adjusting the phase of each transmission signal, the transmission waves transmitted from the multiple transmission antennas 125 reinforce each other in a predetermined direction to form a beam (beamforming). In this case, the correlation between the direction of beamforming and the to-be-controlled phase amounts of the transmission signals to be transmitted by the multiple transmission antennas 125 may be stored in, for example, any storage unit. The transmission signal, whose phase has been controlled by the phase controller 123, is supplied to the amplifier 124.

The amplifier 124 amplifies the power (electric power) of the transmission signal supplied from the phase controller 123, for example, based on control performed by the signal processing unit 110. If the detection unit 100 includes multiple transmission antennas 125, multiple amplifiers 124 may each amplify the power of the transmission signal supplied from a corresponding one of the multiple phase controllers 123, for example, based on control performed by the signal processing unit 110. Since technologies for amplifying the power of a transmission signal are already known, more detailed description thereof is omitted. The amplifier 124 is connected to the transmission antenna 125.

The transmission antenna 125 outputs (transmits) the transmission signal amplified by the amplifier 124 as a transmission wave. When the detection unit 100 includes multiple transmission antennas 125, each of the multiple transmission antennas 125 may output (transmit) as a transmission wave the transmission signal amplified by the corresponding one of the multiple amplifiers 124. The transmission antenna 125 may be configured in the same or a similar manner to a transmission antenna used in known radar technology, and therefore a detailed description thereof is omitted.

In this way, the detection unit 100 according to an embodiment includes the transmission antenna 125, and can transmit a transmission signal (for example, a transmission chirp signal) as a transmission wave from the transmission antenna 125. Here, at least one of the functional units constituting the detection unit 100 may be housed in a single housing. In addition, in this case, the single housing may have a structure that cannot be easily opened. For example, the transmission antenna 125, the reception antenna 131, and the amplifier 124 may be housed in a single housing, and this housing may have a structure that cannot be easily opened. In addition,

The detection unit 100 illustrated in FIG. 2 is an example including one transmission antenna 125. However, in an embodiment, the detection unit 100 may include any number of transmission antennas 125. On the other hand, in an embodiment, the detection unit 100 may include multiple transmission antennas 125 when the transmission waves transmitted from the transmission antennas 125 are to form a beam in a predetermined direction. In an embodiment, the detection unit 100 may include any number of transmission antennas 125. In this case, the detection unit 100 may also include multiple phase controllers 123 and amplifiers 124 respectively corresponding to the multiple transmission antennas 125. The multiple phase controllers 123 may respectively control the phases of the multiple transmission waves supplied from the synthesizer 122 and transmitted from the multiple transmission antennas 125. Furthermore, the multiple amplifiers 124 may respectively amplify the power of the transmission signals to be transmitted from the transmission antennas 125. In this case, the detection unit 100 may include multiple transmission antennas. In this way, when the detection unit 100 includes multiple transmission antennas 125, the detection unit 100 may also include multiple functional units required for transmitting transmission waves from the multiple transmission antennas 125.

The reception antenna 131 receives a reflection wave. The reflection wave may be wave generated by a transmission wave being reflected by a predetermined object 200. The reception antenna 131 may include multiple antennas. When the detection unit 100 according to an embodiment includes multiple reception antennas 131, the multiple reception antennas 131 may form a reception antenna array (reception array antenna). The reception antenna 131 may be configured in the same or a similar manner to a reception antenna used in a known radar technology, and therefore a detailed description thereof is omitted. The reception antenna 131 is connected to the LNA 132. A reception signal based on a reflection wave received by the reception antenna 131 is supplied to the LNA 132. Thus, when the detection unit 100 includes multiple reception antennas 131, the detection unit 100 may also include multiple functional units required to receive and process reflection waves from the multiple reception antennas 131.

The detection unit 100 according to an embodiment can receive, from the multiple reception antennas 131, a reflection wave generated when a transmission wave transmitted as a transmission signal, such as a chirp signal, (transmission chirp signal), is reflected by a predetermined object 200. Thus, when a transmission chirp signal is transmitted as a transmission wave, a reception signal based on the received reflection wave is also referred to as a reception chirp signal. In other words, the detection unit 100 receives a reception signal (e.g., a reception chirp signal) as a reflection wave from the reception antenna 131.

The LNA 132 amplifies the reception signal based on the reflection wave received by the reception antenna 131 with low noise. The LNA 132 may be a low noise amplifier, and amplifies the reception signal supplied from the reception antenna 131 with low noise. The reception signal amplified by the LNA 132 is supplied to the mixer 133.

The mixer 133 generates a beat signal by mixing (multiplying) the reception signal of an RF frequency supplied from the LNA 132 with the transmission signal supplied from the synthesizer 122. The beat signal mixed by the mixer 133 is supplied to the IF unit 134.

The IF unit 134 performs frequency conversion on the beat signal supplied from the mixer 133, and thereby lowers the frequency of the beat signal to an intermediate frequency (IF frequency). The beat signal whose frequency has been lowered by the IF unit 134 is supplied to the AD converter 135.

The AD converter 135 digitizes the analog beat signal supplied from the IF unit 134. The AD converter 135 may be configured with any analog-to-digital conversion circuit (ADC). The beat signal digitized by the AD converter 135 is supplied to the signal processing unit 110. When there are multiple reception units 130, the beat signals digitized by the multiple AD converters 135 may be each supplied to the signal processing unit 110.

The signal processing unit 110 may perform FFT processing on the beat signal digitized by the AD converter 135 (hereinafter referred to as "distance FFT processing" as appropriate). For example, the signal processing unit 110 may perform FFT processing on the complex signal supplied from the AD converter 135. The beat signal digitized by the AD converter 135 can be expressed as changes in signal strength (power) over time. By performing FFT processing on such a beat signal, the signal processing unit 110 can express the signal as a signal strength (power) corresponding to each frequency. By performing distance FFT processing in the signal processing unit 110, a complex signal corresponding to distance can be obtained based on the beat signal digitized by the AD converter 135.

When a peak in the result obtained by the distance FFT processing is greater than or equal to a predetermined threshold, the signal processing unit 110 may determine that the predetermined object 200 is present at a distance corresponding to the peak. For example, a method is known in which an object reflecting a transmission wave (a reflecting object) is judged to be present when a peak value greater than or equal to a threshold is detected from the average power or amplitude of a disturbance signal, as in detection processing using a constant false alarm rate (CFAR).

Thus, the detection unit 100 according to an embodiment can detect the object 200 that reflects a transmission wave as a target based on a transmission signal transmitted as a transmission wave and a reception signal received as a reflection wave.

The signal processing unit 110 can estimate the distance to a predetermined object based on one chirp signal (for example, c1 illustrated in FIG. 3). That is, the detection unit 100 can measure (estimate) the distance between the detection unit 100 and the predetermined object 200 by performing distance FFT processing. Since technologies for measuring (estimating) the distance to a predetermined object by performing FFT processing on a beat signal are well known, a more detailed description thereof is simplified or omitted as appropriate.

Furthermore, the signal processing unit 110 may further perform FFT processing (hereinafter referred to as "velocity FFT processing") on the beat signal that has been subjected to distance FFT processing. For example, the signal processing unit 110 may perform FFT processing on the complex signal that has been subjected to distance FFT processing. The signal processing unit 110 can estimate the relative velocity with respect to a predetermined object based on a subframe of the chirp signal (e.g., subframe 1 illustrated in FIG. 3). By performing velocity FFT processing on multiple chirp signals in the signal processing unit 110, a complex signal corresponding to the relative velocity can be obtained based on the complex signal corresponding to the distance obtained by the distance FFT processing.

By performing distance FFT processing on the beat signal as described above, multiple vectors can be generated. By obtaining the phase of the peak in the results of performing velocity FFT processing on these multiple vectors, the relative velocity with respect to the predetermined object can be estimated. That is, the electronic device 1 can measure (estimate) the relative velocity between the detection unit 100 and the predetermined object 200 by performing velocity FFT processing. In this way, the signal processing unit 110 may perform a two-dimensional fast Fourier transform (2D-FFT) in the distance (Range) direction and the velocity direction based on the beat signal. Technologies for measuring (estimating) the relative velocity with respect to a predetermined object by performing velocity FFT processing on the results of distance FFT processing are well known, and therefore more detailed description thereof is simplified or omitted as appropriate.

In a general FMCW radar technology, whether or not a target is present can be determined based on the results obtained by performing fast Fourier transform processing on a beat frequency extracted from a reception signal and so forth. Here, results obtained by extracting the beat frequency from the reception signal, performing fast Fourier transform processing and so forth include noise components due to clutter (unwanted reflection components). Therefore, processing may be performed to remove the noise components from the results obtained by processing the reception signal and extract only the target signal.

Furthermore, the signal processing unit 110 may estimate the direction (direction of arrival estimation) from which a reflection wave arrives (angle of arrival) from the predetermined object 200 based on the determination of whether or not a target exists. The signal processing unit 110 may perform direction of arrival estimation for a point where a target is determined to exist. The detection unit 100 can estimate the direction in which a reflection wave arrives by receiving reflection waves from multiple reception antennas 131. For example, the multiple reception antennas 131 are disposed at a predetermined interval. In this case, a transmission wave transmitted from the transmission antenna 125 is reflected by the predetermined object 200 and becomes a reflection wave, and the multiple reception antennas 131 disposed at a predetermined interval each receive a reflection wave R. Then, the signal processing unit 110 can estimate the direction from which reflection waves arrive at the reception antennas 131 based on the phase of the reflection wave received by each of the multiple reception antennas 131 and the path difference for each reflection wave. That is, the detection unit 100 can measure (estimate) the angle of arrival $\theta$, which indicates the direction from which the reflection wave reflected by the target arrives, based on the results of the velocity FFT processing.

Various techniques have been proposed for estimating the direction from which the reflection wave R arrives based on the result of velocity FFT processing. For example, known algorithms for estimating the direction of arrival include MUSIC (multiple signal classification) and ESPRIT (estimation of signal parameters via rotational invariance technique). Therefore, a more detailed description of known techniques is simplified or omitted as appropriate.

The signal processing unit 110 detects an object present in the area where the transmission wave is transmitted based on at least one selected from a group consisting of distance FFT processing, velocity FFT processing, and arrival angle estimation. The signal processing unit 110 may perform object detection by, for example, performing clustering processing based on distance information, velocity information, and angle information supplied thereto. Known algorithms used for clustering data include, for example, DBSCAN (density-based spatial clustering of applications with noise). In the clustering processing, for example, the average power of points constituting a detected object may be calculated.

As described above, the detection unit 100 can detect an object that reflects a transmission wave in three-dimensional space as point cloud information. That is, in an embodiment, based on a detection result output from the detection unit 100, whether or not an object that reflects a transmission wave exists at certain coordinates in three-dimensional space can be determined (detected). Furthermore, in an embodiment, the detection unit 100 can detect the signal strength and velocity of each point in three-dimensional space. As described above, the detection unit 100 according to an embodiment may detect an object that reflects a transmission wave as point cloud information in three-dimensional space based on a transmission signal transmitted as a transmission wave and a reception signal received as a reflection wave resulting from reflection of the transmission wave.

In addition, as illustrated in FIG. 1, the electronic device 1 according to an embodiment may include the imaging unit 300. The electronic device 1 and the imaging unit 300 may be connected to each in a wired or wireless manner, or in a combination of wired and wireless manners.

The imaging unit 300 may include an image sensor that electronically captures an image, such as a digital camera. The imaging unit 300 may include an imaging element that performs photoelectric conversion such as a CCD (charge coupled device image sensor) or a CMOS (complementary metal oxide semiconductor) sensor. The imaging unit 300 may capture an image of an object present in front of the imaging unit 300, for example. Here, the object present in front of the imaging unit 300 may be, for example, a car, a human, and/or any object present in the surroundings. The imaging unit 300 may convert the captured image into a signal and transmit the signal to the electronic device 1. For example, the imaging unit 300 may transmit a signal based on the captured image to the storage unit 20, the communication unit 30, the output unit 40, and/or the controller 10 etc. of the electronic device 1. The imaging unit 300 is not limited to an imaging device such as a digital camera, and may be any device capable of capturing an image of an object. The imaging unit 300 may be, for example, a LIDAR (light detection and ranging).

In an embodiment, the imaging unit 300 may capture still images at predetermined intervals (for example, 15 frames per second), for example. In addition, in an embodiment, the imaging unit 300 may capture continuous video images, for example.

Next, the arrangement of the detection unit 100 and the imaging unit 300 connected to the electronic device 1 according to an embodiment will be described.

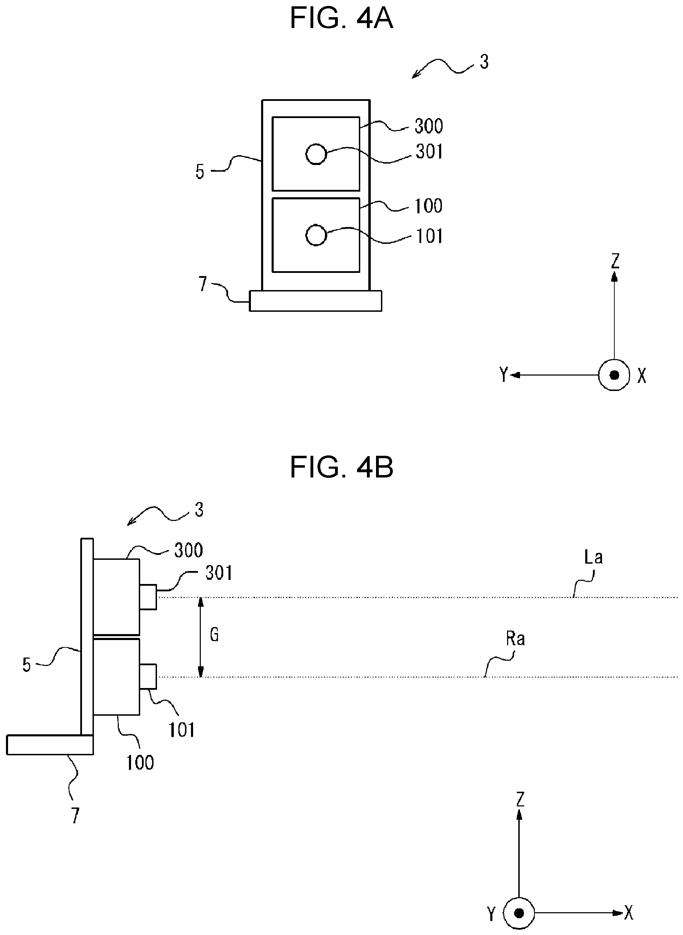

FIGs. 4A and 4B are diagrams illustrating an example of the configuration of a detection device in which the detection unit 100 and the imaging unit 300 are disposed.

FIG. 4A is a front view illustrating an example of a detection device 3 according to an embodiment as viewed from the front. FIG. 4B is a side view illustrating an example of the detection device 3 according to an embodiment as viewed from the side (left). The coordinate axes illustrated in FIG. 4A and FIG. 4B are aligned with the coordinate axes indicating the propagation direction of a transmission wave and/or reflection wave of the detection unit 100 illustrated in FIG. 2.

As illustrated in FIGs. 4A and 4B, the detection device 3 according to an embodiment may include the detection unit 100 and the imaging unit 300. In addition, as illustrated in FIGs. 4A and 4B, the detection device 3 according to an embodiment may include at least one of a holder part 5 or a mounting part 7, as appropriate. Furthermore, the detection device 3 according to an embodiment may be disposed in any other device or the housing of another device, without including at least one of the holder part 5 or the mounting part 7.

The detection unit 100 illustrated in FIGs. 4A and 4B may be the detection unit 100 described with reference to FIGs. 1 and/or 2. As illustrated in FIGs. 4A and 4B, the detection unit 100 may include a radio wave input unit 101 that receives a reflection wave resulting from reflection of a transmission wave by an object. In the detection unit 100, at least one of the transmission antenna 125 or the reception antenna 131 may be disposed at a position corresponding to the radio wave input unit 101. As illustrated in FIG. 4B, the radio wave input unit 101 may be aligned with an optical axis Ra of the detection unit 100. Here, the optical axis of the detection unit 100 may, for example, extend in a direction perpendicular to a surface on which at least one of the transmission antenna 125 or the reception antenna 131 of the detection unit 100 is installed. Furthermore, when the detection unit 100 includes a plurality of at least one of the transmission antenna 125 or the reception antenna 131, the optical axis of the detection unit 100 may extend in a direction perpendicular to a surface on which at least one of the plurality of antennas is installed. With this configuration, the detection unit 100 can transmit a transmission wave and/or receive a reflection wave centered on the optical axis Ra. That is, the detection unit 100 can detect an object as a point cloud in an area centered on the optical axis Ra.

The detection unit 100 according to an embodiment may have directivity. That is, the detection unit 100 may detect an object using radio waves having directivity. Here, "directivity" may be the relationship between the radiation direction and radiation intensity of radio waves as a characteristic of the antenna. The presence or absence of directivity is related to the application of the antenna. An antenna with a high directivity strongly radiates radio waves in a specific direction. The directivity may be the same characteristic in the case of transmission and the case of reception. The electric field strength of the radio waves radiated by the antenna can be expressed in decibels (dB) as the gain of the antenna. The detection unit 100 according to an embodiment may have directivity, and thus, for example, may have a main lobe (main beam) in the direction of the optical axis Ra illustrated in FIG. 4B. That is, the detection unit 100 according to an embodiment may have the strongest radiation level in the direction of the optical axis Ra, for example.

The imaging unit 300 illustrated in FIGs. 4A and 4B may be the same as the imaging unit 300 described with reference to FIG. 1. As illustrated in FIGs. 4A and 4B, the imaging unit 300 may include a light input unit 301 that receives light reflected by an object. In the imaging unit 300, an image sensor such as a light receiving element or an imaging element may be disposed at a position corresponding to the light input unit 301. As illustrated in FIG. 4B, the light input unit 301 may be aligned with an optical axis La of the imaging unit 300. The light input unit 301 may be located at a position where a lens is disposed in the imaging unit 300. Here, the optical axis of the imaging unit 300 may be, for example, a direction perpendicular to a surface on which a light receiving element (or an imaging element) used for imaging in the imaging unit 300 is installed. With such a configuration, the imaging unit 300 can capture an image centered on the optical axis La.

As illustrated FIGs. 4A and 4B, the holder part 5 maintains the detection unit 100 and the imaging unit 300 in a fixed state in the detection device 3. The holder part 5 may maintain the detection unit 100 at a height at which the detection unit 100 can easily detect a predetermined detection area. The holder part 5 may also maintain the detection unit 100 at a height at which the imaging unit 300 can easily capture an image of a predetermined imaging area. The detection unit 100 and the imaging unit 300 may be fastened to the holder part 5 with screws, or may be fixed to the holder part 5 with an adhesive, or may be fixed by being fitted into the holder part 5. The holder part 5 may include a mechanism that allows the optical axes of the detection unit 100 and the imaging unit 300 to be adjusted in the detection device 3.

As illustrated in FIGs. 4A and 4B, the mounting part 7 enables the detection device 3, in which the detection unit 100 and the imaging unit 300 are installed, to be attached and fixed to, for example, another member or another device. The mounting part 7 may be fastened to, for example, another member or another device by screws, or may be fixed with an adhesive or may be fixed by being fitted into the other member or device. The mounting part 7 can have various configurations, such as a pedestal shape, in order to stabilize the detection device 3 including the detection unit 100 and the imaging unit 300.

The holder part 5 and the mounting part 7 may be composed of a metal such as an aluminum plate, or may be composed of a material such as an acrylic plate. The holder part 5 and the mounting part 7 may be composed of an aluminum plate or an acrylic plate having a thickness of around 5 mm, for example.

As illustrated in FIGs. 4A and 4B, in the detection device 3 according to an embodiment, the detection unit 100 and the imaging unit 300 may be disposed near each other so as to be adjacent to each other. In the example illustrated in FIGs. 4A and 4B, the detection unit 100 and the imaging unit 300 are disposed adjacent to each other in the vertical direction (Z-axis direction). In the detection device 3 according to an embodiment, the detection unit 100 and the imaging unit 300 may be disposed adjacent to each other in the horizontal direction or a diagonal direction.

Furthermore, as illustrated in FIG. 4B, in the detection device 3 according to an embodiment, the detection unit 100 and the imaging unit 300 may be disposed so that their optical axes Ra and La are parallel (or substantially parallel) to each other. That is, in the electronic device 1 according to an embodiment, the point cloud information from the detection unit 100 and the image from the imaging unit 300 may be used with the imaging unit 300 and the detection unit 100 installed so that the optical axis La of the imaging unit 300 is parallel (or substantially parallel) to the optical axis Ra of the detection unit 100.

In addition, as illustrated in FIG. 4B, in the detection device 3 according to an embodiment, the detection unit 100 and the imaging unit 300 may be disposed so that the distance between their respective optical axes Ra and La is maintained at a distance G. As a result of the detection unit 100 and the imaging unit 300 being disposed in this way, the point cloud information from the detection unit 100 and the image information from the imaging unit 300 are shifted from each other by the distance G. Therefore, the detection unit 100 and the imaging unit 300 may be disposed such that the distance G therebetween is relatively small, for example, 2 to 3 cm.

In an embodiment, the controller 10 may correct at least one of the point cloud information obtained by the detection unit 100 detecting an object (target) or the image obtained by the imaging unit 300 capturing an image of the object (target). In an embodiment, the controller 10 may use information that has been adjusted by correcting the point cloud information from the detection unit 100 and the image from the imaging unit 300.

As described above, the electronic device 1 according to an embodiment can utilize an image obtained by the imaging unit 300 capturing an image of an object and point cloud information obtained by the detection unit 100 detecting the object.

Next, operation of the electronic device 1 according to an embodiment will be described.

For example, the detection unit 100, such as a radar sensor, can detect a predetermined detection area based on transmitting a transmission wave and receiving a reflection wave resulting from reflection of the transmission wave. More specifically, the detection unit 100 can detect (or estimate) the position and velocity of a predetermined object and/or the arrival angle of a received reflection wave by receiving a reflection wave resulting from reflection of the transmission wave reflected by the object.

The detection unit 100 can also detect the vibration of an object (such as the presence or absence of vibration or the degree of vibration) by continuously detecting the position and/or velocity of the object for a predetermined period of time. The detection unit 100 can detect the vibration of an object in a contactless manner, for example, using millimeter waves. For example, the detection unit 100 can detect the vibration of various facilities, such as buildings or structures. In recent years, extending the lifespan and strengthening infrastructure has become an important social issue. Vibrations of infrastructure and the like are important physical information for determining the soundness of such infrastructure and the like. Therefore, there is a demand for a means of efficiently inspecting various buildings or structures (e.g., buildings, bridges, tunnels, etc.) including various infrastructure facilities. For example, a sensing system that can measure the vibration of an object in a non-contact manner using a radar sensor such as a millimeter-wave radar would be a promising means for efficiently inspecting infrastructure and the like.

However, technologies such as millimeter-wave radar detect responses from objects throughout a predetermined detection area based on the transmission of transmission waves and the reception of reflection waves. For example, let us assume that when millimeter-wave radar is used to detect vibrations from a building present within a predetermined detection area, for example, a vehicle is also present within the detection area. In such a case, the millimeter-wave radar will detect not only the vibrations of the building but also the vibrations of the vehicle. Therefore, with such detection, accurately detecting the vibrations of only the building may be difficult.

For example, in the above-described example, when a building is specified by a user, vibration information corresponding to the building is extracted. If vibrations of the building are detected, not only does this offer high convenience, but vibrations of the building can be detected with high accuracy. Therefore, the electronic device 1 according to an embodiment extracts vibration information corresponding to an object, for example, when the user specifies the object. Therefore, the electronic device 1 according to an embodiment can detect vibrations of the object (even if an object other than that object is present in the detection area). Therefore, the electronic device 1 according to an embodiment can not only offer improved convenience but can also accurately detect vibrations of the object. Such an embodiment will be described below.

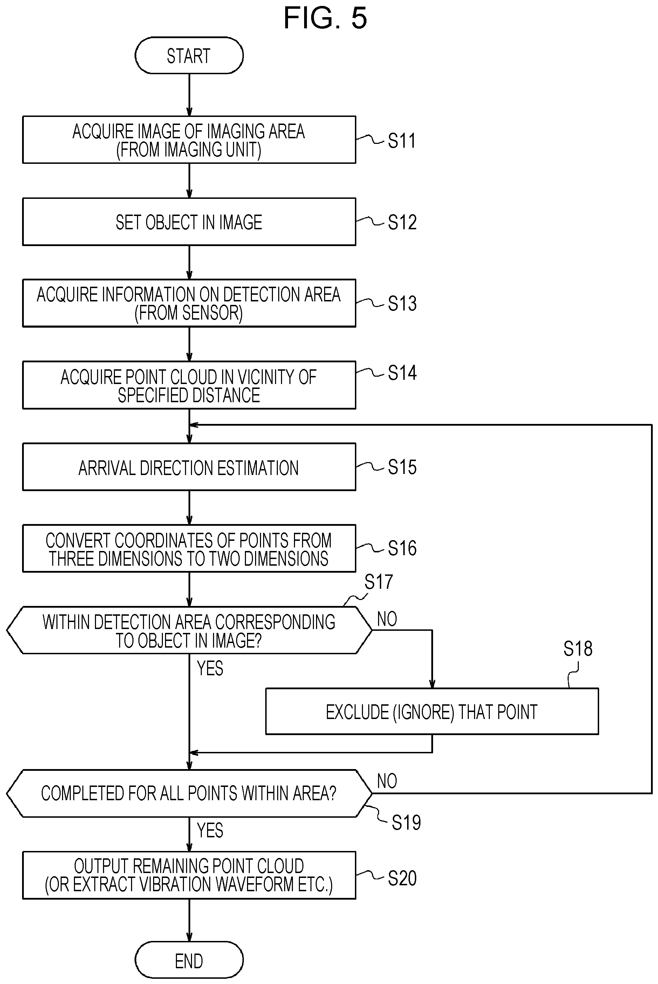

FIG. 5 is a flowchart illustrating an example of the operation of the electronic device 1 according to an embodiment. The operation illustrated in FIG. 5 may be started, for example, when a user of the electronic device 1 according to an embodiment wishes to detect vibration of a predetermined object. At the time when the operation illustrated in FIG. 5 starts, the detection unit 100 is assumed to be ready to detect a predetermined detection area based on the transmission of a transmission wave and the reception of a reflection wave resulting from reflection of the transmission wave by transmitting and receiving radio waves such as millimeter waves. Furthermore, at the time when the operation illustrated in FIG. 5 starts, the imaging unit 300 is assumed to be ready to capture an image of a predetermined imaging area.

When the operation illustrated in FIG. 5 starts, the controller 10 of the electronic device 1 according to the embodiment acquires an image of a predetermined imaging area captured by the imaging unit 300 (Step S11).

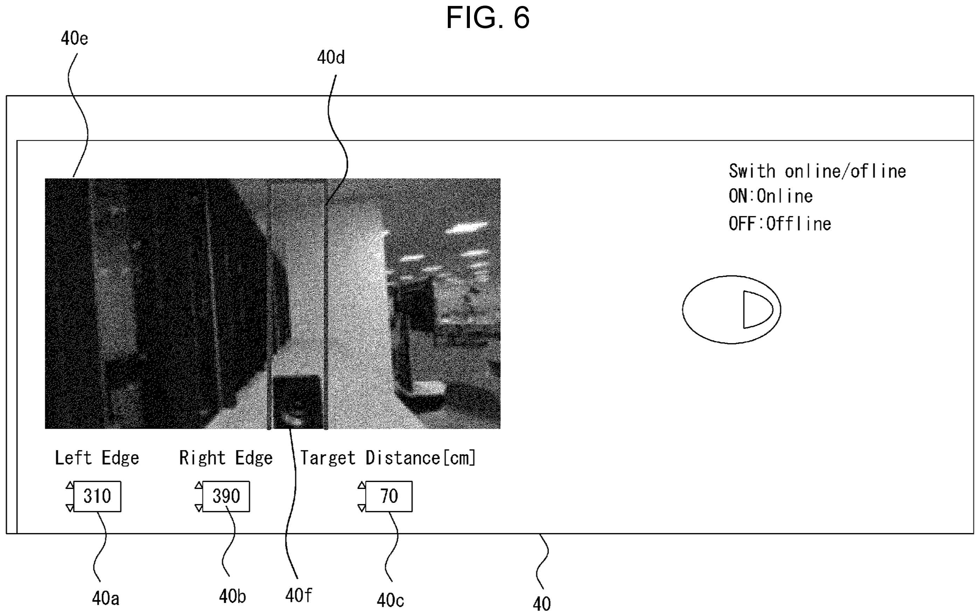

In an embodiment, the controller 10 may display the image acquired in Step S11, for example, on the output unit 40 (display). FIG. 6 is a diagram illustrating an example in which an image captured by the imaging unit 300 is displayed on the output unit 40 (display). In FIG. 6, the output unit 40 displays an image 40e of the interior of a facility captured by the imaging unit 300. A loudspeaker 40f placed on a desk is displayed near the center of the bottom of the image 40e of the interior of the facility illustrated in FIG. 6. In FIG. 6, this loudspeaker 40f is an object. Of course, the object in the present disclosure is not limited to the loudspeaker 40f, and may be any appropriate object, such as a person, a thing, or an animal. As illustrated in FIG. 6, the output unit 40 may display a bounding box 40d. The bounding box 40d may be used to set a predetermined object (or target area) in the acquired image. In addition, the output unit 40 may display a setting box 40a for setting the left edge of the bounding box 40d. The output unit 40 may also display a setting box 40b for setting the right edge of the bounding box 40d. The output unit 40 may also display a setting box 40c for setting the distance to the target (object). In the example illustrated in FIG. 6, the bounding box 40d includes an object 40f (loudspeaker 40f) in the image 40e.

Next, the controller 10 sets a predetermined object (or target area) in the image acquired in Step S11 (Step S12). In Step S12, the controller 10 may set the predetermined object (or target area) in the image based on an operation performed by the user. For example, the controller 10 may prompt the user to set the predetermined object (or target area) via a user interface (UI) such as that illustrated in FIG. 6. The UI illustrated in FIG. 6 prompts the user to set the predetermined object (or target area) in the image using the bounding box 40d. In the UI illustrated in FIG. 6, the user can adjust (set) the horizontal range of the loudspeaker illustrated in FIG. 6 by specifying the horizontal range (Left Edge and Right Edge) of the bounding box using the setting boxes 40a and/or 40b.

FIG. 6 illustrates a case in which the detection unit 100 estimates the direction of arrival in the horizontal direction. That is, the UI illustrated in FIG. 6 prompts the user to set the horizontal range of a predetermined object (or target area) in the image using a bounding box. On the other hand, if the detection unit 100 can also estimate the direction of arrival in the vertical direction, for example, the UI illustrated in FIG. 6 may prompt the user to set the vertical range of a predetermined object (or target area) in the image using a bounding box.

Furthermore, if the output unit 40 (display) includes a touch panel, the controller 10 may set a predetermined object (or target area) based on a touch (tap) operation performed on the touch panel by the user. In this case, when the user touches (taps) a predetermined object in the image of the UI illustrated in FIG. 6, the object (or target area) corresponding to the touched image may be automatically set.

Furthermore, the controller 10 may set a predetermined object (or target area) in an image without any operation being performed by the user. For example, the controller 10 may perform image recognition or the like on an image such as that illustrated in FIG. 6, so that when a predetermined object is included in the image, the predetermined object (or target area) is automatically set. For example, let us assume that a loudspeaker has been set in advance as an object to be recognized by image recognition. In this case, when a loudspeaker is included in the image of the UI illustrated in FIG. 6, the object (or target area) corresponding to the image of the loudspeaker may be automatically set without any operation being performed by the user.

Once the object has been set in Step S12, the controller 10 acquires information on a predetermined detection area detected by the detection unit 100 (Step S13). In Step S13, the controller 10 may acquire information on the predetermined detection area detected based on the transmission of a transmission wave and the reception of a reflection wave resulting from reflection of the transmission wave. The processing of Step S13 does not necessarily need to be performed after Steps S11 and S12, and may be performed, for example, before Steps S11 and S12.

The predetermined detection area detected by the detection unit 100 in Step S13 needs to include the object in the image set in Step S12. As described above, the detection unit 100 and the imaging unit 300 may be disposed so that their respective optical axes Ra and La are parallel (or substantially parallel). With such a configuration, the imaging unit 300 can capture an image centered on the optical axis La. Therefore, the predetermined detection area detected by the detection unit 100 can be made to include the object set in the image.

After acquiring the information on the predetermined detection area in Step S13, the controller 10 acquires a point cloud in the vicinity of a specified distance (Step S14). In Step S14, the controller 10 may extract a point cloud in the vicinity of a specified distance from information corresponding to coordinates (point cloud) in three-dimensional space. Here, the "specified distance" may represent the distance to an object to be detected by the detection unit 100.

For example, let us assume that the distance (from the detection device 3) to the loudspeaker is approximately 70 cm in the image illustrated in FIG. 6. In this case, the controller 10 may prompt the user to input the value of 70 cm as the distance (Target Distance) to the object (target) in the UI illustrated in FIG. 6. In Step S14, the controller 10 may extract a point cloud in the vicinity of the specified 70 cm from information corresponding to coordinates (point cloud) in three-dimensional space.

Furthermore, the detection unit 100 can detect the distance to the object. Therefore, in Step S14, the controller 10 may specify, for example, the distance to the object detected by the detection unit 100 as the above-mentioned "specified distance." In this case, the controller 10 does not need to prompt the user to input the distance to the object (target) (Target Distance). In Step S14, the controller 10 may extract a point cloud in the vicinity of the distance to the object detected by the detection unit 100 from information corresponding to coordinates (point cloud) in three-dimensional space.

In a simplified embodiment, the processing of Step S14 may be omitted.

Next, the controller 10 performs arrival direction estimation for the point cloud extracted as a point cloud in the vicinity of the specified distance from the information corresponding to the coordinates (point cloud) in the three-dimensional space (Step S15). In Step S15, the controller 10 may perform processing based on the same or a similar concept as the processing performed by the signal processing unit 110 as normal basic radar processing.

The information on the predetermined detection area obtained upon completion of the processing in Step S15 may be information obtained as a result of basic radar processing performed by the signal processing unit 110 of the detection unit 100 or the controller 10. For example, the processing up to Step S14 may include the above-mentioned 2D-FFT processing and CFAR processing. In the 2D-FFT processing, 2D-FF processing may be performed on IF signals received by the detection unit 100. In the CFAR processing, point cloud information may be obtained by performing CFAR processing on the results calculated by the 2D-FFT processing within a range in the vicinity of a specified distance. In addition, for example, in the processing up to Step S15, the above-described processing for estimating the direction of arrival etc. may be included. In the direction of arrival estimation processing, processing for estimating the direction of arrival may be performed on the point cloud obtained by the CFAR processing.

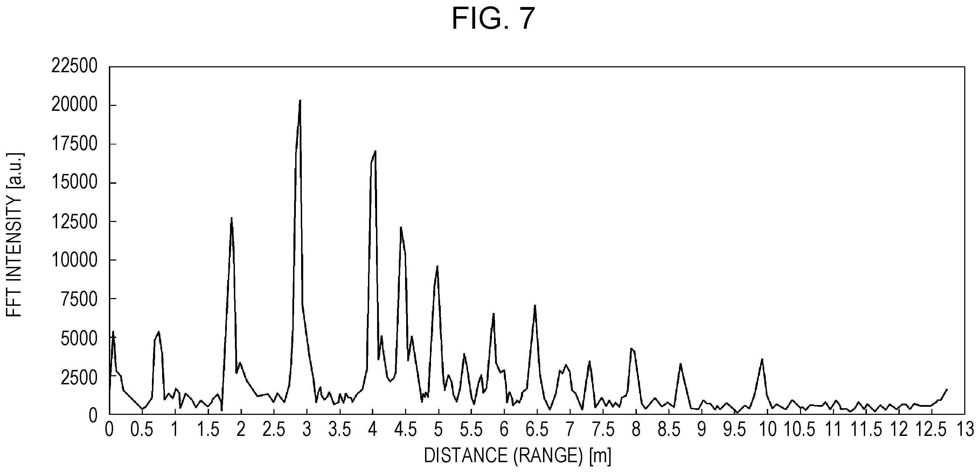

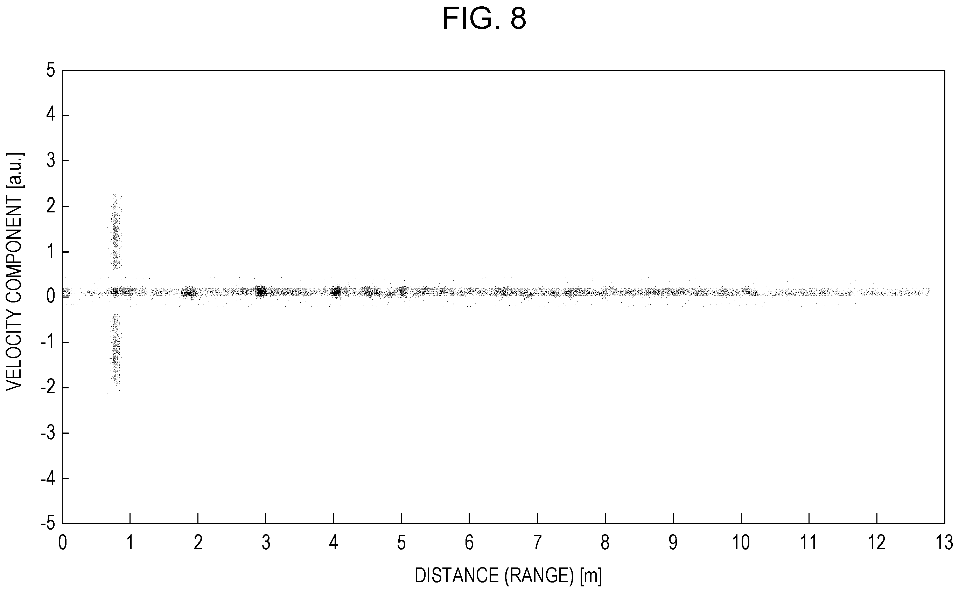

FIG. 7 is a diagram illustrating an example of the results of distance FFT processing performed by the signal processing unit 110 of the detection unit 100 in the situation illustrated in FIG. 6. The horizontal axis represents the distance (Range) detected by the detection unit 100, and the vertical axis represents the intensity of the FFT-processed signal. As illustrated in FIG. 7, a peak in the FFT intensity, which is thought to indicate detection of the loudspeaker, can be seen in the vicinity of a distance (Range) of 0.7 m (70 cm). FIG. 8 is a diagram illustrating an example of the results of velocity FT processing performed by the signal processing unit 110 of the detection unit 100 in the situation illustrated in FIG. 6. The horizontal axis represents the distance (Range) detected by the detection unit 100, and the vertical axis represents the velocity component of the FFT-processed signal. As illustrated in FIG. 7, a peak in the velocity component, which is thought to indicate detection of the loudspeaker, can be seen in the vicinity of a distance (Range) of 0.7 m (70 cm).

Once the processing in Step S15 is completed, the controller 10 can obtain information corresponding to coordinates (point cloud) in three-dimensional space as a point cloud in the vicinity of the specified distance. Next, the controller 10 converts the obtained coordinates of the points in the three-dimensional space into coordinates on a two-dimensional plane (Step S16). That is, in Step S16, the controller 10 associates the coordinates of the points in the three-dimensional space detected by the detection unit 100 with coordinates on the image captured by the imaging unit 300. In Step S16, the controller 10 may use any method to associate the coordinates of the points in the three-dimensional space detected by the detection unit 100 with coordinates on the image captured by the imaging unit 300.

An example of a method for associating the coordinates of the point cloud in three-dimensional space detected by the detection unit 100 with coordinates on the image captured by the imaging unit 300 will be described below.

The point cloud data acquired in Step S15 is information indicating the three-dimensional position of the object detected in three-dimensional space. Therefore, the controller 10 converts the three-dimensional point cloud data acquired in Step S15 into two-dimensional data (Step S16). In Step S16, the controller 10 may generate point cloud information that can be processed two-dimensionally from the point cloud information in three-dimensional space output by the detection unit 100.

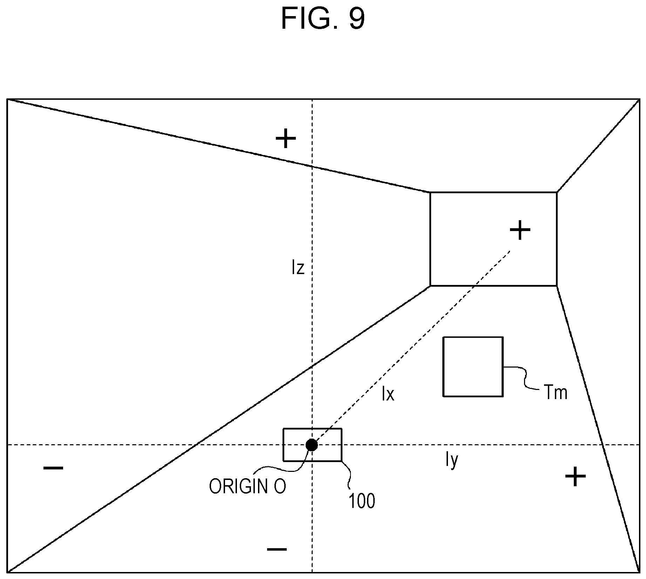

FIG. 9 is a diagram for explaining point cloud information in three-dimensional space output by the detection unit 100. FIG. 9 is a diagram illustrating an example of a situation in which an object Tm located at a certain location is three-dimensionally detected by the detection unit 100 installed at an origin O.

As illustrated in FIG. 9, the position where the detection unit 100 is installed is regarded as a reference (origin O), with the direction toward the object Tm being the positive X-axis direction, and the direction away from the object Tm being the negative X-axis direction. Furthermore, as illustrated in FIG. 9, the position where the detection unit 100 is installed is regarded as the reference (origin O), with the side to the right the detection unit 100 being the positive Y-axis direction, and the side to the left the detection unit 100 being the negative Y-axis direction. In addition, as illustrated in FIG. 9, the position where the detection unit 100 is installed is taken as the reference (origin O), with the side above the detection unit 100 being the positive Z-axis direction, and the side below the detection unit 100 being the negative Z-axis direction. That is, in FIG. 9, lx indicates the distance in the depth direction, ly indicates the distance in the horizontal direction, and lz indicates the distance in the vertical (height) direction. In the situation illustrated in FIG. 9, the output of the detection unit 100 may be four-channel data of data elements (signal strength and velocity) of a position (X, Y, Z) in three-dimensional space at a certain moment. In Step S16 illustrated in FIG. 5, the controller 10 converts the information detected in such a three-dimensional space into two-dimensional information.

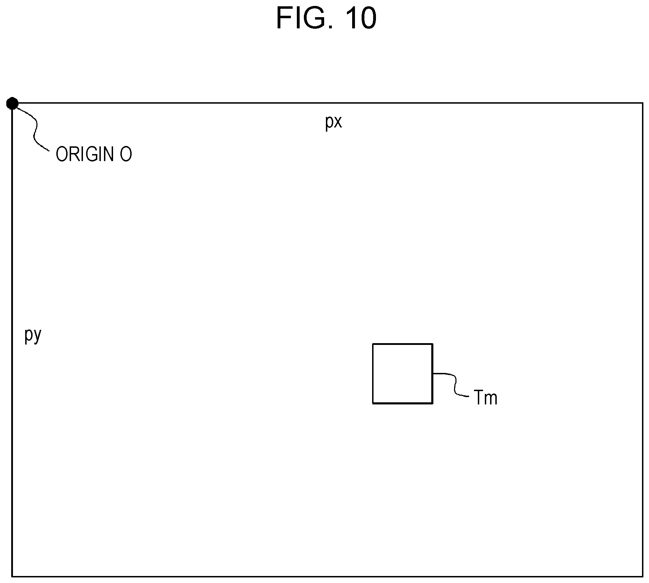

FIG. 10 is a diagram for explaining an example of generating point cloud information that can be processed two-dimensionally from point cloud information in three-dimensional space output by the detection unit 100. FIG. 10 is a diagram illustrating an example in which the object Tm located at a certain location is detected three-dimensionally (spatially) by the detection unit 100 installed at the origin O and converted two-dimensionally (planarly) by the electronic device 1.

As illustrated in FIG. 10, with the position of the origin O as the reference, the side to the right of the origin O is the positive X-axis direction, and the side below the origin O is the positive Y-axis direction. That is, in FIG. 10, px indicates the horizontal-direction coordinate, and py indicates the vertical-direction coordinate. In the situation illustrated in FIG. 10, the output of the detection unit 100 is converted from the above-mentioned four-channel data at a certain moment into three-channel data of data elements (signal strength and velocity) of a position (X, Y) on a two-dimensional plane. In this way, in Step S16 illustrated in FIG. 5, electronic device 1 converts information detected in three-dimensional space into information on a two-dimensional plane.

When converting the information detected in the three-dimensional space into information on a two-dimensional plane as described above, the coordinates on the two-dimensional plane may be calculated, for example, based on the following Formulas (1) and (2).

[Math. 1]

$$px_i = \frac{ly_i \times (M-1)}{lx_i \times 2 \times \tan\frac{\alpha x}{2}} + \frac{M-1}{2} \qquad (1)$$

[Math. 2]

$$py_i = -\frac{lz_i \times (N-1)}{lx_i \times 2 \times \tan\frac{\alpha y}{2}} + \frac{N-1}{2} \qquad (2)$$

In the above Formulas (1) and (2), $lx_i$, $ly_i$, and $lz_i$ represent outputs based on the results of detection performed by the detection unit 100, i.e., point cloud information in three-dimensional space. In particular, $lx_i$ represents the distance in the x direction of the i-th piece of information detected by the detection unit 100. Furthermore, $ly_i$ represents the distance in the y direction of the i-th piece of information detected by the detection unit 100. Furthermore, $lz_i$ represents the distance in the z direction of the i-th piece of information detected by the detection unit 100.

Furthermore, in the above Formula (1) and Formula (2), $px_i$ and $py_i$ indicate the coordinates of a point cloud converted into information on a two-dimensional plane by the controller 10 of the electronic device 1. In particular, $px_i$ represents the x-coordinate of the i-th piece of information detected by the detection unit 100. Furthermore, $py_i$ represents the y-coordinate of the i-th piece of information detected by the detection unit 100.

Furthermore, in the above Formula (1), M indicates the number of pixels in the horizontal direction when a two-dimensional planar image is assumed, and $\alpha x$ indicates a horizontal angle of view when a two-dimensional planar image is assumed. Furthermore, in the above Formula (2), N indicates the number of pixels in the vertical direction when a two-dimensional planar image is assumed, and $\alpha y$ indicates a vertical angle of view when a two-dimensional planar image is assumed.

In the above Formulas (1) and (2), $px_i$ and $py_i$ may be rounded off to the nearest whole number so as to function as coordinate values. In addition, in the above Formulas (1) and (2), data that does not satisfy, for example, $0 \le px_i \le M$ or $0 \le py_i \le N$ may be discarded so that $px_i$ and $py_i$ fit within the size of the image after conversion to a two-dimensional plane.

In this way, the electronic device 1 according to an embodiment may generate point cloud information that can be processed two-dimensionally from the output of the detection unit 100. In particular, the electronic device 1 according to an embodiment may convert the point cloud information detected by the detection unit 100 into point cloud information that can be processed two-dimensionally based on at least one of a predetermined number of pixels in a two-dimensional image or a predetermined angle of view. When generating point cloud information that can be processed two-dimensionally from the output of the detection unit 100, the electronic device 1 according to an embodiment may use a conversion formula other than the above Formulas (1) and (2). Each point constituting the two-dimensional point cloud data generated in Step S16 may include three-channel information of reflection intensity, distance, and velocity at that point.

After the three-dimensional coordinates of points have been converted into two dimensions in Step S14, the controller 10 determines whether or not a point is within a detection area corresponding to the object in the image (Step S17). That is, in Step S17, the controller 10 determines whether or not the point detected by the detection unit 100 is at a position corresponding to the object in the image captured by the imaging unit 300. For example, in Step S17, the controller 10 determines whether or not the point detected by the detection unit 100 is located within the area of a loudspeaker in the image displayed on the output unit 40 in FIG. 6.

For example, if a point detected by the detection unit 100 is not located within the area of a loudspeaker in the image displayed on the output unit 40 in FIG. 6, the point is not considered to be a response based on the detection of the loudspeaker. Therefore, if the determination in Step S17 is negative (NO), the controller 10 excludes, ignores, or discards the point before proceeding to the next Step S19.

On the other hand, for example, if a point detected by the detection unit 100 is located within the area of the loudspeaker in the image displayed on the output unit 40 in FIG. 6, the point is considered to be a response based on the detection of the loudspeaker. Therefore, if the determination in Step S17 is positive (YES), the controller 10 proceeds to the next Step S19 without excluding, ignoring, or discarding the point.

In Step S19, the controller 10 determines whether the determination in Step S17 has been performed for all points within the detection area detected by the detection unit 100. If the determination in Step S17 has not been performed for all points within the detection area (NO) in Step S19, the controller 10 returns to Step S15 and repeats the processing of Steps S15 to S18 for the remaining points. On the other hand, if the determination in Step S17 has been performed for all points within the detection area (YES) in Step S19, the controller 10 may proceed to Step S20.

In Step S20, the controller 10 outputs the remaining point cloud (the point cloud that was not discarded etc. in Step S18). In this way, the electronic device 1 can extract and output the detection results at the positions corresponding to the predetermined object in the image captured by the imaging unit 300 from the information detected by the detection unit 100.

Furthermore, in Step S20, the controller 10 may continue to detect changes over time in the remaining point cloud (point cloud that was not discarded in Step S18) in order to extract and output a vibration waveform of the object, etc. The controller 10 may display the vibration waveform of the object output in this way on, for example, the output unit 40 (display).

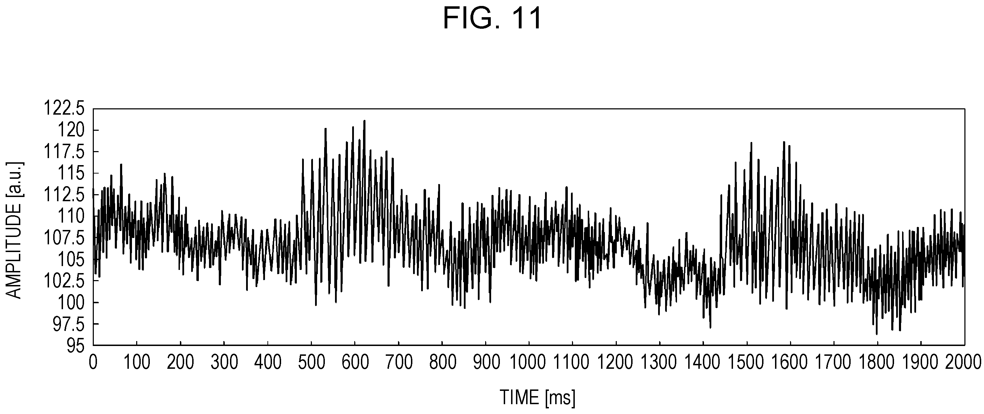

FIG. 11 is a graph illustrating the results of detecting vibrations of a loudspeaker set in an image displayed on the output unit 40 in FIG. 6, for example, as an example of the operation of the electronic device 1 according to an embodiment.

The vertical axis of the graph illustrated in FIG. 11 represents the amplitude of vibration, and the horizontal axis represents time.

As described above, in the electronic device 1, the controller 10 extracts information on a detection area corresponding to a region of a predetermined object in an image of a predetermined imaging area from information on the predetermined detection area (for example, Steps S17 and S18 illustrated in FIG. 5). As the information on the predetermined detection area, the controller 10 may obtain, for example, information detected by the detection unit 100 based on transmission of a transmission wave and reception of a reflection wave resulting from reflection of the transmission wave. The controller 10 may also obtain an image of the predetermined imaging area from, for example, the imaging unit 300.

In an embodiment, the controller 10 may extract information on a point cloud within a detection area corresponding to the region of the predetermined object from information on a point cloud detected as information on the predetermined detection area (for example, Steps S17 and S18 illustrated in FIG. 5).

In addition, in an embodiment, the controller 10 may extract information on a point cloud within the detection area corresponding to the region of the predetermined object from information on a point cloud detected in the vicinity of a specified distance among information on the predetermined detection area (for example, Step S14 illustrated in FIG. 5).

In addition, in an embodiment, the controller 10 may extract information on a detection area corresponding to the region of the predetermined object specified in the image of the predetermined imaging area from the information on the predetermined detection area (for example, Step S12 illustrated in FIG. 5).

In addition, in an embodiment, the controller 10 may extract information on the point cloud within the detection area corresponding to the region of the predetermined object from information on an estimated direction of the point cloud detected as information on the predetermined detection area (for example, Step S15 illustrated in FIG. 5).

In addition, in an embodiment, the controller 10 may convert the three-dimensional coordinates of the point cloud detected as information of the predetermined detection area into two-dimensional coordinates, and determine whether the two-dimensional coordinates of the point cloud are within the region of the predetermined object in the image of the predetermined imaging area (for example, Step S16 illustrated in FIG. 5).

In an embodiment, the controller 10 may generate information relating to vibration of the predetermined object based on information on the detection area corresponding to the region of the predetermined object (for example, Step S20 illustrated in FIG. 5).

In an embodiment, the controller 10 may acquire information on the predetermined detection area from the detection unit 100 that is disposed so that the optical axis thereof is oriented in a predetermined direction.

In this case, the controller 10 may acquire an image of the predetermined imaging area from the imaging unit 300 that is disposed so that the optical axis thereof is oriented in a direction substantially parallel to the predetermined direction.

According to the electronic device 1 of an embodiment, for example, when an object is specified by a user, vibration information corresponding to the object can be extracted. Therefore, the electronic device 1 according to an embodiment can detect vibrations of the object (even if an object other than that object is present in the detection area). Therefore, the electronic device 1 according to an embodiment can not only offer improved convenience but can also accurately detect vibrations of the object.

Embodiments of the present disclosure have been described based on the drawings and examples, but note that a variety of variations and amendments may be easily made by one skilled in the art based on the present disclosure. Therefore, note that such variations and amendments are included within the scope of the present disclosure. For example, the functions and so forth included in each component or step can be rearranged in a logically consistent manner, and a plurality of components or steps can be combined into a single component or step or a single component or step can be divided into a plurality of components or steps. Although embodiments of the present disclosure have been described while focusing on devices, the embodiments of the present disclosure can also be realized as a method including steps executed by individual component of the device. The embodiments of the present disclosure can also be realized as a method executed by a processor included in a device, a program, or a storage medium recording the program. Please understand that the scope of the present disclosure also includes these forms.

The above-described embodiment is not limited to only being implemented as the electronic device 1. For example, the above-described embodiments may be implemented as a system including the electronic device 1. The above-described embodiments may also be implemented as a control method for a device such as the electronic device 1 or a system including such a device. Furthermore, the above-described embodiments may also be implemented as a program executed by a device such as the electronic device 1 or an information processing device (e.g., a computer), or a system, or as a storage medium or recording medium on which such a program is recorded.

REFERENCE SIGNS

**EP 4 776 027 A1**

| | |
|---|---|
| 1 | electronic device |
| 3 | detection device |
| 5 | holder part |
| 7 | mounting part |
| 10 | controller |
| 20 | storage unit |
| 30 | communication unit |
| 40 | output unit |
| 100 | detection unit |
| 101 | radio wave input unit |
| 110 | signal processing unit |
| 120 | transmission unit |
| 121 | signal generating unit |
| 122 | synthesizer |
| 123 | phase controller |
| 124 | amplifier |
| 125 | transmission antenna |
| 130 | reception unit |
| 131 | reception antenna |
| 132 | LNA |
| 133 | mixer |
| 134 | IF unit |
| 135 | AD converter |
| 300 | imaging unit |
| 301 | light input unit |

**Claims**

1. An electronic device comprising:

   a controller configured to
   acquire information on a predetermined detection area detected based on transmission of a transmission wave and reception of a reflection wave resulting from reflection of the transmission wave,
   acquire an image of a predetermined imaging area, and
   extract, from the information on the predetermined detection area, information on a detection area corresponding to a region of a predetermined object in the image of the predetermined imaging area.

2. The electronic device according to claim 1, wherein the controller extracts information on a point cloud within the detection area corresponding to the region of the predetermined object from information on a point cloud detected as information on the predetermined detection area.

3. The electronic device according to claim 1, wherein the controller extracts information on a point cloud within the detection area corresponding to the region of the predetermined object from information on a point cloud detected in a vicinity of a specified distance among the information on the predetermined detection area.

4. The electronic device according to claim 1, wherein the controller extracts, from the information on the predetermined detection area, information on the detection area corresponding to the region of the predetermined object specified in the image of the predetermined imaging area.

5. The electronic device according to claim 1, wherein the controller extracts information on a point cloud within the detection area corresponding to the region of the predetermined object from information on an estimated direction of a point cloud detected as information on the predetermined detection area.

6. The electronic device according to claim 1, wherein the controller converts three-dimensional coordinates of a point cloud detected as information on the predetermined detection area into two-dimensional coordinates, and determines whether the two-dimensional coordinates of the point cloud are within the region of the predetermined object in the image of the predetermined imaging area.

18

7. The electronic device according to claim 1, wherein the controller generates information relating to vibration of the predetermined object based on the information on a detection area corresponding to the region of the predetermined object.

8. The electronic device according to claim 1,

   wherein the controller acquires information on the predetermined detection area from a detection unit that is disposed with an optical axis thereof oriented in a predetermined direction, and
   acquires the image of the predetermined imaging area from an imaging unit disposed with an optical axis thereof oriented in a direction substantially parallel to the predetermined direction.

9. A system comprising:

   a detection unit configured to detect a predetermined detection area based on transmission of a transmission wave and reception of a reflection wave resulting from reflection of the transmission wave;
   an imaging unit configured to capture an image of a predetermined imaging area; and
   a controller configured to extract, from information on the predetermined detection area detected by the detection unit, information on a detection area corresponding to a region of a predetermined object in the image of the predetermined imaging area captured by the imaging unit.

10. The system according to claim 9, wherein the detection unit is disposed with an optical axis thereof oriented in a predetermined direction, and
    the imaging unit is disposed with an optical axis thereof oriented in a direction substantially parallel to the predetermined direction.

11. A control method for an electronic device, the control method comprising:

    acquiring information on a predetermined detection area detected based on transmission of a transmission wave and reception of a reflection wave resulting from reflection of the transmission wave;
    acquiring an image of a predetermined imaging area; and
    extracting, from the information on the predetermined detection area, information on a detection area corresponding to a region of a predetermined object in the image of the predetermined imaging area.

12. A program for causing an electronic device to execute:

    acquiring information on a predetermined detection area detected based on transmission of a transmission wave and reception of a reflection wave resulting from reflection of the transmission wave;
    acquiring an image of a predetermined imaging area; and
    extracting, from the information on the predetermined detection area, information on a detection area corresponding to a region of a predetermined object in the image of the predetermined imaging area.

# FIG. 1

1

| | | |
|---|---|---|
| | 30 ～ COMMUNICATION UNIT | |

300

IMAGING UNIT

100

10 ～ CONTROLLER

40

OUTPUT UNIT

DETECTION UNIT

20 ～ STORAGE UNIT

FIG. 2

# FIG. 3

SUBFRAME 1  SUBFRAME 2  SUBFRAME 16  FRAME INTERVAL  SUBFRAME 1

c1 c2 c8 c1 c2 c8 c1 c2 c8 c1 c2 c8

FRAME 1  FRAME 2

EP 4 776 027 A1

# FIG. 4A

# FIG. 4B

# FIG. 5

START

ACQUIRE IMAGE OF IMAGING AREA
(FROM IMAGING UNIT) — S11

SET OBJECT IN IMAGE — S12

ACQUIRE INFORMATION ON DETECTION AREA
(FROM SENSOR) — S13

ACQUIRE POINT CLOUD IN VICINITY OF
SPECIFIED DISTANCE — S14

ARRIVAL DIRECTION ESTIMATION — S15

CONVERT COORDINATES OF POINTS FROM
THREE DIMENSIONS TO TWO DIMENSIONS — S16

S17
WITHIN DETECTION AREA CORRESPONDING
TO OBJECT IN IMAGE? — NO

YES

S18
EXCLUDE (IGNORE) THAT POINT

NO
COMPLETED FOR ALL POINTS WITHIN AREA?
S19

YES

OUTPUT REMAINING POINT CLOUD
(OR EXTRACT VIBRATION WAVEFORM ETC.) — S20

END

# FIG. 6

40e    40d

Swith online/ofline
ON:Online
OFF:Offline

Left Edge    Right Edge    Target Distance[cm]

310    390    70

40a    40b    40f    40c    40

# FIG. 7

# FIG. 8

EP 4 776 027 A1

# FIG. 9

# FIG. 10

px

ORIGIN O

py

Tm

## FIG. 11

## INTERNATIONAL SEARCH REPORT

| International application No. |
| --- |
| **PCT/JP2024/031489** |

**A. CLASSIFICATION OF SUBJECT MATTER**

*G01S 13/86*(2006.01)i; *G01S 13/89*(2006.01)i
FI:  G01S13/86; G01S13/89

According to International Patent Classification (IPC) or to both national classification and IPC

**B. FIELDS SEARCHED**

Minimum documentation searched (classification system followed by classification symbols)

G01S7/00 - G01S7/51; G01S13/00 - G01S13/95; G01S17/00 - G01S17/95

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-85886 A (INDUSTRIAL TECHNOLOGY RESEARCH INSTITUTE) 04 June 2020 (2020-06-04)<br>    paragraphs [0012]-[0036], fig. 1-6 | 1-5, 9, 11-12 |
| Y | paragraphs [0012]-[0036], fig. 1-6 | 6-8, 10 |
| Y | JP 2022-130177 A (KYOCERA CORPORATION) 06 September 2022 (2022-09-06)<br>    paragraphs [0109]-[0123], fig. 6-8 | 6 |
| Y | paragraphs [0144]-[0156], fig. 14-15 | 8, 10 |
| Y | JP 2020-106284 A (OKI ELECTRIC INDUSTRY CO., LTD.) 09 July 2020 (2020-07-09)<br>    paragraph [0002] | 7 |
| A | US 9221396 B1 (GOOGLE INC.) 29 December 2015 (2015-12-29)<br>    entire text, all drawings | 1-12 |

☐ Further documents are listed in the continuation of Box C.          ☑ See patent family annex.

| | |
| --- | --- |
| *     Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **25 September 2024** | **08 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

EP 4 776 027 A1

**INTERNATIONAL SEARCH REPORT**
**Information on patent family members**

International application No.

**PCT/JP2024/031489**

| Patent document cited in search report | | | Publication date (day/month/year) | Patent family member(s) | | | Publication date (day/month/year) |
|---|---|---|---|---|---|---|---|
| JP | 2020-85886 | A | 04 June 2020 | US paragraphs [0018]-[0042], fig. 1-6 | 2020/0175720 | A1 | |
| | | | | TW | 202020734 | A | |
| | | | | CN | 111238494 | A | |
| JP | 2022-130177 | A | 06 September 2022 | (Family: none) | | | |
| JP | 2020-106284 | A | 09 July 2020 | (Family: none) | | | |
| US | 9221396 | B1 | 29 December 2015 | US entire text, all drawings | 9555740 | B1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023144771 A

- JP 2021196195 A